# EUROPÄISCHE PATENTSCHRIFT

(11) **EP 0 780 165 B1**
(45) Veröffentlichungstag und Bekanntmachung des Hinweises auf die Patenterteilung: **02.06.1999**
(21) Anmeldenummer: 96120584.6
(22) Anmeldetag: 20.12.1996
(51) Int. Cl.: B09B 1/00

(54) **Nachfüllverfahren für eine Mülldeponie**
Replenishment method of a waste dump
Méthode de rajout à un dépot de déchets

(30) Priorität: 22.12.1995 DE 19548184
(43) Veröffentlichungstag der Anmeldung: 25.06.1997
(73) Patentinhaber: Dr.-Ing. Heuser Consult Ingenieurbüros für Umwelttechnik, 64297 Darmstadt (DE)
(72) Erfinder: Heuser, Ernst-Erich, Dr., 64297 Darmstadt (DE); Hermle, Karl, Dipl.-Ing., 78559 Gosheim (DE)
(74) Vertreter: Schickedanz, Willi, Dipl.-Ing.

(56) Entgegenhaltungen:
- WO-A-95/13147
- JP-A- 6 218 343

## Beschreibung

Die Erfindung betrifft ein Verfahren nach dem Oberbegriff des Patentanspruchs 1.

Die Müllentsorgung stellt ein großes Problem für die Kommunen dar, weil einerseits der Müllanfall immer größer und andererseits der Platz für die Lagerung des Mülls immer knapper wird. Unter Müll versteht man Abfallstoffe unterschiedlicher Herkunft, z. B. Hausmüll, Sperrmüll, Gewerbe- und Industriemüll, Straßenkehricht und Sondermüll. Die vorliegende Erfindung bezieht sich auf Müll, der in oberirdischen Deponien gelagert wird. Dieser Müll schließt auch Reste aus thermischen Behandlungsanlagen ein.

Die Form der ungeordneten Ablagerung - der sogenannten "Kippe", die in Deutschland bis etwa 1976 praktiziert werden konnte - bei Hausmüll-Deponien führt zu erheblichen hygienischen Mißständen, beispielsweise zu Staubverwehungen, Müllbränden, Geruchsbelästigungen, Ungezieferplagen, Verschmutzung von Grund- und Oberflächenwasser, so daß man bestrebt ist, diese Mißstände zu verringern.

Eine Möglichkeit für die Verringerung der Mißstände besteht in der Anlage von geordneten und kontrollierten Deponien. Diese setzen eine Auswahl des Geländes nach geologischen, hydrologischen, ökologischen und ökonomischen Bedingungen sowie feste Zufahrtstraßen, Verdichtung des in Lagen eingebrachten Mülls, Abdeckung des Lagerplatzes, Abdichtung gegen Abschwemmungen durch Niederschläge und zum Schutz des Grundwassers voraus.

Bei einer geordneten Deponie wird in der Regel auch ein Beobachtungsbrunnen bis zum Grundwasser gebohrt, über den die Beeinträchtigung des Grundwassers durch die Mülldeponie beobachtet werden kann.

Von den Beeinträchtigungen, die von Hausmüll-Deponien ausgehen, sind die Gasemissionen aufgrund von Fäulnisprozessen und die Sickerwasseremissionen zum Grundwasser die wichtigsten.

Quellen für die Gasemissionen und die Sickerwasseremissionen ist der gesamte Deponiekörper, soweit er nicht abgedichtet ist, also die offene Hausmüll-Oberfläche. Diese Emissionen können drastisch reduziert werden, wenn die Mülloberflächen abgedeckt bzw. abgedichtet werden.

Es ist bereits bekannt, die Einbauflächen von Mülldeponien bis zur endgültigen Oberflächenabdichtung einzuhausen (Verbunddeponie Bielefeld-Herford, Beschreibung der REW Plan GmbH Köln vom 25. September 1991), wobei zwischen der Mülloberfläche und einem Dach ein Freiraum entsteht. Die gesamte, jeweils in Betrieb befindliche Deponiefläche wird hierbei also großflächig überdacht. Hierdurch wird Sickerwasser durch eindringendes Niederschlagswasser vermieden, die Langzeitwirksamkeit der Abfallvorbehandlung gesichert, die Basis- und Oberflächenabdichtung unter umweltabgeschirmten Bedingungen hergestellt und ein Schutz vor Emissionen durch Witterungseinflüsse gewährleistet. Nachteilig sind allerdings die hohen Kosten für die Überdachung sowie die Gefahr von Schlagwettern durch das Deponiegas, das sich zwischen dem eingebauten Müll und dem Dach ansammelt. Außerdem ist die Überdachung von Müll in der Regel nur bei flacheren Deponien realisierbar, die nicht stark in die Höhe wachsen. Für Deponien mit großen Schnitthöhen und langen Böschungsflanken ist die Überdachung nicht geeignet.

Weiterhin ist es bekannt, eine Versiegelung direkt auf der Mülloberfläche vorzunehmen. Diese Versiegelungsart wird bei offenen Mülloberflächen, die ihr Endschüttniveau erreicht haben, verwendet. Bis zum Abklingen der Setzungen werden sie mit einem temporären Abdecksystem abgedeckt, beispielsweise mit einer Kunststoffbahn. Nachteilig ist bei dieser Art der Versiegelung, daß der Einbau von neuem Müll nur erfolgen kann, wenn die ganze Kunststoffbahn abgenommen wird. Bei den üblichen Deponie-Größen werden dabei Flächen von 5 ha und mehr wieder freigesetzt. Anschließend wird das endgültige Abdichtungssystem aufgebracht. Ferner ist es bekannt, offene Müllfächen, die einen definierten Einbauzustand erreicht haben, für mittlere Zeiträume, d. h. für 2 bis 10 Jahre, abzudichten.

Ferner ist auch noch ein Abfallablagerungsgelände bekannt, das einen Raum in Form einer Vertiefung aufweist, um darin Abfall aufzunehmen (DE 43 17 976 A1). Hierbei ist eine Flächenstruktur vorgesehen, welche die gesamte obere Öffnung des Vertiefungsraums abdeckt, wobei die Flächenstruktur vor dem Beginn des Ablagerns des Abfalls in den Raum hergestellt ist und mindestens eine Ablagerungsöffnung in der Flächenstruktur vorgesehen ist, die geöffnet und geschlossen werden kann.

Nachteilig ist bei diesem Abfallablagerungsgelände, daß eine Vertiefung, z. B. ein Gebirgstal, vorhanden sein muß. Außerdem sind die Flächenstrukturen starr und schwer und müssen durch Pfähle abgestützt werden. Überdies muß Luft aus dem Vertiefungsraum abgepumpt werden, um die aerobe oder anaerobe Zersetzung der organischen Substanzen des Mülls zu steuern.

Des weiteren ist ein Verfahren zum Lagern von Müll bekannt, mit dem erreicht werden soll, daß das faule Wasser, welches vom Müll herrührt, am Austritt gehindert wird (JP-A-06218343). Hierbei werden durch Folien, die an ihrer Rändern miteinander in Kontakt oder Verbindung stehen, Müllsäcke gebildet, in denen sich der Müll befindet.

Schließlich ist auch noch ein Verfahren zum Behandeln von Müll bekannt, bei dem Schichten von Müll übereinander gelagert werden und zwischen den einzelnen Schichten jeweils eine Abdeckung vorgesehen ist (WO 95/13147). Obgleich diese Abdeckung aus mehreren Teilen zusammengesetzt sein kann, wird sie doch als Ganzes auf eine Müllschicht gelegt, die sie komplett überdeckt.

Der Erfindung liegt die Aufgabe zugrunde, die Hausmüll-Emissionen während des laufenden Mülleinbaus stark zu reduzieren, ohne daß hierzu der Müll komplett versiegelt oder eine starre Flächenstruktur vorgesehen sein muß.

Diese Aufgabe wird gemäß den Merkmalen des Patentanspruchs 1 gelöst.

Der mit der Erfindung erzielte Vorteil besteht insbesondere darin, daß die gesamte Mülloberfläche, mit Ausnahme des jeweils aktuellen Einbaufelds für Neumüll, durch Folien abgedeckt ist. Dieses Einbaufeld hat maximal etwa eine Größe von 2500 m², wie es die Vorschrift der TA Siedlungsabfall (Bergs, Dreyer, Neuenhahn, Radde: TA Siedlungsabfall, Abfallwirtschaft in Forschung und Praxis, Band 61, Erich Schmidt Verlag, Berlin 1993, ISBN 3 503 034 501) vorsieht. Durch die großflächige Abdeckung der Mülloberfläche können keine Gase in die Umgebung entweichen. Als nachteilig könnte angesehen werden, daß durch offene Bereiche während des Müll-Einbaubetriebs keine 100 %ige Abdeckung der Mülloberfläche vorhanden ist. Bei näherer Betrachtung zeigt sich jedoch, daß der frisch eingebaute Müll in der Regel noch in der aeroben Abbauphase liegt, also kein Deponiegas produziert, sondern in Oxidation ist. Auch hat er seine Wasserspeicherkapazität noch nicht erreicht, so daß der anfallende Niederschlag komplett aufgesaugt wird. Unter Berücksichtigung dieses Sachverhalts kann man deshalb von einer über 90 %igen Reduktion der Emissionen im Einbaufeld ausgehen. Bei einer Ausgestaltung der Erfindung können die offenen Bereiche mit einem Zelt oder dergleichen abgedeckt werden, so daß sogar eine 100-%ige Abdeckung der Mülloberfläche gewährleistet ist. Hinzu kommt, daß bei der Erfindung die gesamte Müllschüttung abgedichtet ist, so daß von dieser Müllschüttung keine Staubemissionen ausgehen können. Weiterhin verbessert die Erfindung die Standsicherheit der Deponie, weil ein Sickerwasseraufstau verhindert wird, der z. B. für das Abrutschen von Böschungen verantwortlich ist. Auch gefährliche chemische Prozesse, die sich durch das Zusammenwirken von Schlacken und Sickerwasser ergeben können, werden verhindert.

Ein Ausführungsbeispiel der Erfindung ist in den Zeichnungen dargestellt und wird im folgenden näher beschrieben. Es zeigen:
- Fig. 1: eine offene Mülloberfläche;
- Fig. 2: ein Abdecksystem für eine Mülldeponie;
- Fig. 3: ein teilweise aufgeklapptes Abdecksystem;
- Fig. 4: ein Müll-Einbaufeld mit umgebendem Wall;
- Fig. 5: ein Müll-Einbaufeld mit lageweise eingebrachtem Hausmüll;
- Fig. 6: ein vollständig beschicktes erstes Müll-Einbaufeld und ein für die Müllbeschickung vorbereitetes zweites Müll-Einbaufeld;
- Fig. 7: den Einbau des Mülls in ein zweites Müll-Einbaufeld sowie die Abdichtung des ersten Müll-Einbaufeldes;
- Fig. 8: eine Draufsicht auf eine Mülldeponie mit einem offenen Müll-Einbaufeld;
- Fig. 9: eine Draufsicht auf die Mülldeponie gemäß Fig. 8, bei der Gasabführungsrohre erkennbar sind;
- Fig. 10: eine Schnittdarstellung von diesen Gasabführungsrohren;
- Fig. 11: eine vergrößerte Darstellung eines Gasabsaugrohrs;
- Fig. 12: eine Prinzipdarstellung zur Erläuterung der Anpassung eines Gasabführungsrohrs an eine wachsende Müllhalde.

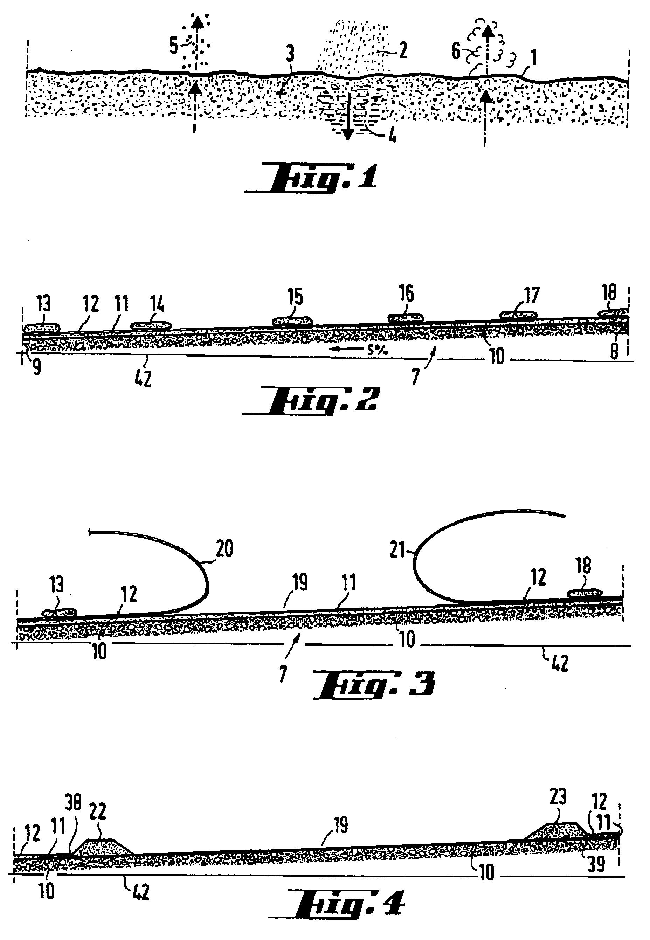

In der Fig. 1 ist eine herkömmliche offene Mülloberfläche 1 dargestellt, wie sie nach dem Einbau mit Kompaktern aussieht. Wird diese Oberfläche mit Regen 2 beaufschlagt, so dringt der Regen als Niederschlagswasser durch die offene Mülloberfläche in den Hausmüll 3 ein und fällt zeitverzögert als Sickerwasser 4 an. Dieses Sickerwasser 4 kann das Grundwasser verunreinigen. Durch die organischen Substanzen, die sich normalerweise im Hausmüll 3 befinden und die sich mit der Zeit zersetzen, entstehen Deponiegase 5, die hochexplosiv sein können. Außerdem entstehen Geruchsgase 6, welche zu einer Belästigung der in der Nähe der Mülldeponie wohnenden Menschen führen.

In der Fig. 2 ist dargestellt, wie eine erfindungsgemäße Hausmülldeponie vorbereitet wird. Als Ausgangssituation wird angenommen, daß bereits Müll auf herkömmliche Art abgelagert und verfestigt wurde. Hierbei wird der aus verfestigtem Müll bestehende Deponiekörper 7 so gestaltet, daß sich ein definiertes Gefälleverhaltnis von einem Innenbereich 8 zu einem Außenbereich 9 ergibt. Ein Gefälle, bei dem Fließwasser gut abgeleitet wird, hat eine Steigung von > 5 %. Die Gestaltung des Deponiekörpers 7 erfolgt dabei mittels Profilierung einer Müllschüttung 10 durch Baumaschinen bzw. Kompakter. Mit 42 ist eine waagrechte Bezugslinie bezeichnet, die ein Gefälle von 5 % erkennen läßt.

Auf diese profilierte Schüttung 10 wird eine Auflage- und Schutzschicht 11 von etwa 10 cm Dicke aufgebracht, die wiederum mittels einer Kunststoffbahn 12 von etwa 1,5 mm Dicke abgedichtet wird. Die Dicke der Kunststofffläche hängt dabei natürlich auch von der Qualität des verwendeten Stoffs ab. Statt Kunststoff könnte beispielsweise auch Gummi verwendet werden. In jedem Fall muß sichergestellt sein, daß die Bahn 12 auch größere Belastungen aushält, so daß Schäden, wie sie bei beschädigten Bahnen auftreten können, vermieden werden . Eine Hochdruck-Polyethylenschicht von 2,5 mm Stärke ist offenbar noch zu dünn, um den über ihr gelagerten Müll von rund sieben Millionen Tonnen dauerhaft zum Grundwasser hin abzudichten (vgl. DER SPIEGEL 38/1996, S. 36 bis 38). Es versteht sich, daß unterhalb des bereits abgelagerten Hausmülls gemäß Fig. 2 eine grundwassersichernde Folie vorgesehen sein kann. Bei der Schutzschicht 11 handelt es sich z. B. um Kies von der Körnung O/32. Es können jedoch auch Kieselsteine oder andere Materialien verwendet werden. Wichtig ist, daß keine spitzen Gegenstände aus dem Müll herausragen, welche die Folie 12 beschädigen könnten. Damit diese Kunststoffbahn 12 nicht durch Windkräfte abgehoben wird, sind auf ihr mehrere Sandsäcke 13 bis 18 vorgesehen. Selbstverständlich können statt Sandsäcken auch andere Gegenstände von relativ großem Gewicht zum Beschweren verwendet werden, z. B. Autoreifen oder Erdhaufen.

Die in der Fig. 2 gezeigte Situation stellt die Ausgangslage dar, an der die eigentliche Erfindung einsetzt. Soll nun die bereits mit Müll 10 versehene Deponie in einem bestimmten Bereich weiter mit Hausmüll beschickt werden, so werden einige der Sandsäcke 13 bis 18 entfernt und die Kunststoffbahn 12 wird aufgeklappt, wodurch ein Fenster 19 entsteht, wie es die Fig. 3 zeigt. Das Aufklappen ist in der Fig. 3 durch zwei Folienhälften 20, 21 dargestellt, die nach rechts bzw. links geklappt werden. In den Randlagen können die Folienhälften 20, 21 zusammengerollt oder auf eine sonstige Art befestigt werden.

Bevor die Kunststoffbahn 12 aufgeklappt werden kann, wird sie erst aufgeschnitten, und zwar mit einer Schneidvorrichtung, die z. B. auch für das Schneiden von Teppischen verwendet wird. Die Folienhälften 20, 21 müssen nicht unbedingt im zusammengerollten Zustand vor Ort liegen bleiben, sondern es ist auch möglich, sie an ihren Enden abzuschneiden und sie - gegebenenfalls nach Zusammenrollen - an einem geschützten Ort zu lagern. Die abgeschnittenen Folienteile können zu einem späteren Zeitpunkt wieder für die Abdeckung freier Müllflächen verwendet werden. Das Zusammenrollen der abgeschnittenen oder nicht abgeschnittenen Folienhälften 20, 21 kann per Hand oder mit einer Aufrollmaschine erfolgen. Zweckmäßig ist es, die Folienhälften 20, 21 auf einen Dorn aufzurollen und den mit den Folienhälften versehenen Dorn an einem wettergeschützten Ort zu lagern.

Das Fenster 19 definiert die Einbaufläche für den Hausmüll, die maximal etwa 2500 m² groß ist. Nachdem das Fenster 19 aufgeklappt ist, können Niederschläge in den Müllkörper eindringen und Sickerwasser erzeugen. Der Bereich um das Fenster 19 herum ist jedoch abgedichtet. Für den Fall, daß auch das Fenster 19 noch abgedichtet werden soll, kann ein Zelt nach Art eines aufblasbaren Tennisspielplatz-Zelts über dem Fenster 19 vorgesehen werden. Es ist auch möglich, ein Zelt nach Art eines Zirkuszelts zu verwenden. In jedem Fall muß die Zufahrt unter das Zelt, d. h. zur eigentlichen Müllablagefläche, gewährleistet sein.

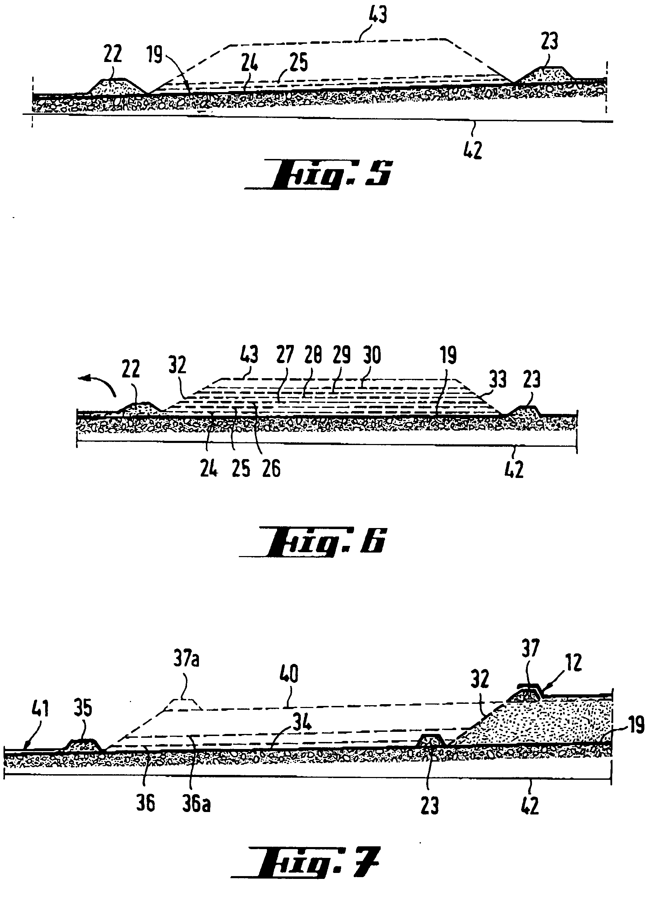

In einem nächsten Schritt wird auch die Schutzschicht 11 teilweise beseitigt und das Einbaufeld oder Fenster 19 mit seitlichen Erdwällen 22, 23 umgeben, wie es die Fig. 4 zeigt. Durch diese Erdwälle 22, 23 soll sichergestellt werden, daß das Niederschlagswasser von noch abgedeckten Bereichen der Deponie nicht in die offenen Einbaufläche fließt. Außerdem wird erreicht, daß das innerhalb der Einbaufläche mit Müll in Berührung kommende Niederschlagswasser nicht dem Oberflächenentwässerungssystem zufließen kann. Mit 38, 39 sind die Schnittstellen bezeichnet, bis zu denen die Folienhälften 20, 21 aufgewickelt bzw. an denen sie abgeschnitten wurden. Die Schutzschicht 11 wurde zweckmäßigerweise ebenfalls bis zu diesen Schnittstellen 38, 39 entfernt.

Nachdem das Einbaufeld 19 in der in der Fig. 4 gezeigten Weise vorbereitet ist, wird Hausmüll im Dünnschichtverfahren in das Einbaufeld 19 eingebracht. Die Fig. 5 zeigt zwei Schichten 24, 25, die im Dünnschichtverfahren eingebracht wurden. Bei dem Dünnschichtverfahren wird Müll von Lastwagen oder dergleichen abgekippt und dann von Planierraupen verteilt, so daß sich relativ dünne Müllschichten ergeben. Mit 43 ist eine Begrenzungslinie bezeichnet, die andeutet, wie hoch die schichtweise Müllaufschüttung insgesamt werden soll.

In der Fig. 6 sind weitere Schichten 26 bis 30 gezeigt, die über den Schichten 24, 25 liegen. Insgesamt werden soviele Schichten aufgebracht, bis etwa eine Höhe von 2 m erreicht ist. Dabei sind die oberen Schichten flächenmäßig kleiner als die jeweils darunter liegenden, so daß sich bei der Gesamtaufschüttung 31 des Mülls an den Rändern 32, 33 Abschrägungen ergeben, die eine Neigung von ca. 1 : 1,5 haben.

Die Folie wird dann in dem Bereich, der durch die Begrenzungslinie 43 angedeutet ist, mit mineralischem Material belegt, um Speicherkapazität für den Oberflächenwasserabfluß zu erhalten. Die Oberfläche des fertigen Einbaufelds 19 hat die gleiche Neigung wie die Schüttung 10, so daß Regenwasser ablaufen kann.

Die für die Abdeckung des Einbaufelds verwendete Folie muß größer sein als die beiden ursprünglich aus der großen Folie herausgeschnittenen Folienhälften 20, 21, denn die durch die Bezugslinie 43 und die Abschrägungen 32, 33 definierte Oberfläche ist größer als die Fläche des Fensters 19. Sollen die alten Folienhälften 20, 21 zur Abdeckung verwendet werden, müssen sie durch Anschweißen eines Folienstücks vergrößert werden.

In der Fig. 7 ist gezeigt, wie nach der Beschickung des ersten Einbaufelds ein zweites Einbaufeld oder Fenster 34 geöffnet wird. Das aufgefüllte erste Fenster 19 befindet sich bei dieser Darstellung auf der rechten Seite. Um eine Vermischung des auf die Oberfläche des mit der Folie 12 abgedeckten verfüllten Einbaufensters 19 anfallenden Oberflächenwassers mit dem im neuen Einbaufeld 34 anfallenden Schmutzwassers zu vermeiden, ist zur Begrenzung der Wall 37 auf der obersten Schicht des Einbaufelds 19 geschüttet und wird, wie zu Fig. 5 beschrieben, mit Hausmüll verfüllt. Dabei lehnt sich die rechte Seite der Schichten 36, 36a an die linke Kante 32 des bereits verfüllten Einbaufelds 19 an. Der alte Wall 22 wird dabei überschüttet. Wenn das zweite Einbaufeld 34 vollständig aufgefüllt ist, ergibt sich eine für die beiden Einbaufelder 19 und 34 gemeinsame Oberfläche, die durch eine gestrichelte Linie 40 angedeutet ist.

In entsprechender Weise kann dann ein drittes Einbaufeld 41 schichtweise mit Müll aufgefüllt werden. Dazu muß der Wall 37 auf seine neue Position 37a verschoben werden. Sind alle Fenster bzw. Einbaufelder aufgefüllt, kann sich der ganze beschriebene Vorgang wiederholen, und zwar jetzt aufbauend auf dem Niveau der gestrichelten Linie 40.

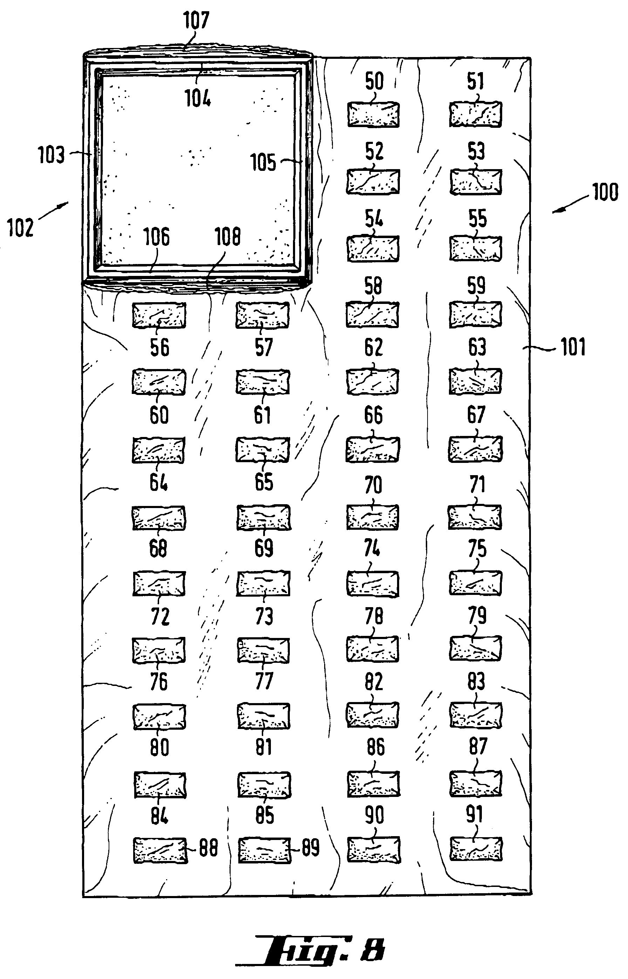

In der Fig. 8 ist eine erfindungsgemäße Deponie 100 in einer Draufsicht dargestellt. Diese Deponie 100 hat beispielsweise eine Fläche von 2 ha mit der Seitenlänge 200 m x 100 m. Die gesamte Deponie ist mit einer Folie 101 abgedeckt, auf der zahlreiche Sandsäcke 50 bis 91 liegen. An einer Stelle, dem sogenannten Fenster 102, ist die Deponie 100 geöffnet. Man erkennt hierbei vier Erdwälle 103 bis 106 sowie zwei zusammengerollte Folien 107, 108. Um mit Lastkraftwagen Müll in das Fenster 102 kippen zu können, werden in der Fig. 8 nicht dargestellte Zufahrtswege vorgesehen, deren Oberfläche an das jeweilige Niveau der Erdwälle 103 bis 106 angepaßt wird. Sowohl innerhalb des Fensters 102 als auch in den übrigen Bereichen der Deponie 100 können Beobachtungsbrunnen vorgesehen werden, die im einzelnen nicht dargestellt sind. Vorzugsweise werden diese Brunnen am Grundwasserzufluß und am Grundwasserabfluß vorgesehen, damit man durch einen Vergleich der Wasserqualität feststellen kann, welchen Einfluß die Deponie auf das Grundwasser hat. Will man auch noch das Fenster 102 vor dem Eindringen von Regenwasser schützen, so kann man, wie oben bereits erwähnt, ein aufblasbares Dach oder dergleichen über dem Fenster vorsehen.

Die Folien 107, 108 können durch Aufschneiden der Gesamtfolie 101 hergestellt werden, d. h. die Folie 100 wird zunächst mit zwei parallelen Schnitten in vertikaler Richtung und dann mit einem mittigen Schnitt in horizontaler Richtung versehen. Für die spätere Abdeckung, d. h. für die Abdeckung nach Auffüllen eines Fensters, können die zusammengerollten Folien 107, 108 wieder verwendet werden. Da ihre Größe nicht ausreicht, den Müll zu überdecken, können sie mit einem zusätzlichen Zwischenstück verschweißt werden.

Die fertig aufgefüllte Deponie hat am Ende ebenfalls ein Gefälle von 5 % auf ihre Oberfläche, und zwar bei der Darstellung der Fig. 8 in vertikaler Zeichenrichtung. Eine Neigung in horizontaler Richtung ist zwecks besseren Abflusses des Oberflächenwassers ebenfalls vorgesehen.

Würde die Anlage in der Weise betrieben, wie sie in der Fig. 8 dargestellt ist, könnten sich unterhalb der Folie Gase entwickeln, welche die Folie allmählich an einer oder an mehreren Stellen hochheben würden. Hieran könnten auch die Sandsäcke 50 bis 99 nichts ändern; die Gasblasen würden sich dann lediglich zwischen den Sandsäcken bilden. Um zu verhindern, daß die Folie durch Gasdruck hochgehoben wird, werden die sich bildenden Gase abgeleitet.

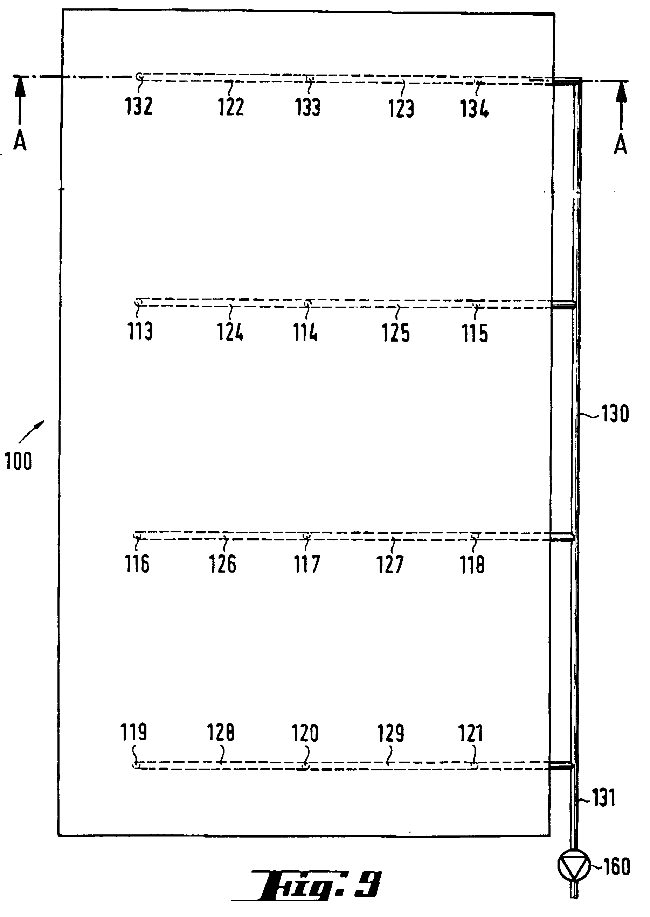

Die Fig. 9 zeigt eine Prinzip-Ansicht auf die in der Fig. 8 gezeigte Deponie, jedoch ohne Folie und Sandsäcke. Es ist hierbei angedeutet, daß mehrere Gasrohre 132 - 134; 113, 114, 115; 116, 117, 118; 119, 120, 121 in die Deponie eingelassen sind, von denen jeweils drei über ein Verbindungsrohr 122, 123; 124, 125; 126, 127; 128, 129 miteinander verbunden sind. Die miteinander verbundenen Gasrohre 132 - 134, 113 - 115; 116 - 118; 119 - 121 sind sodann mit einem gemeinsamen Sammelrohr 130 verbunden, an dessen Ende 131 eine Absaugpumpe 160 angeschlossen ist. Mit dieser Absaugpumpe 160 werden die sich im Müll entwickelnden Gase abgesaugt und abgefackelt oder einer Verwertung zugeführt.

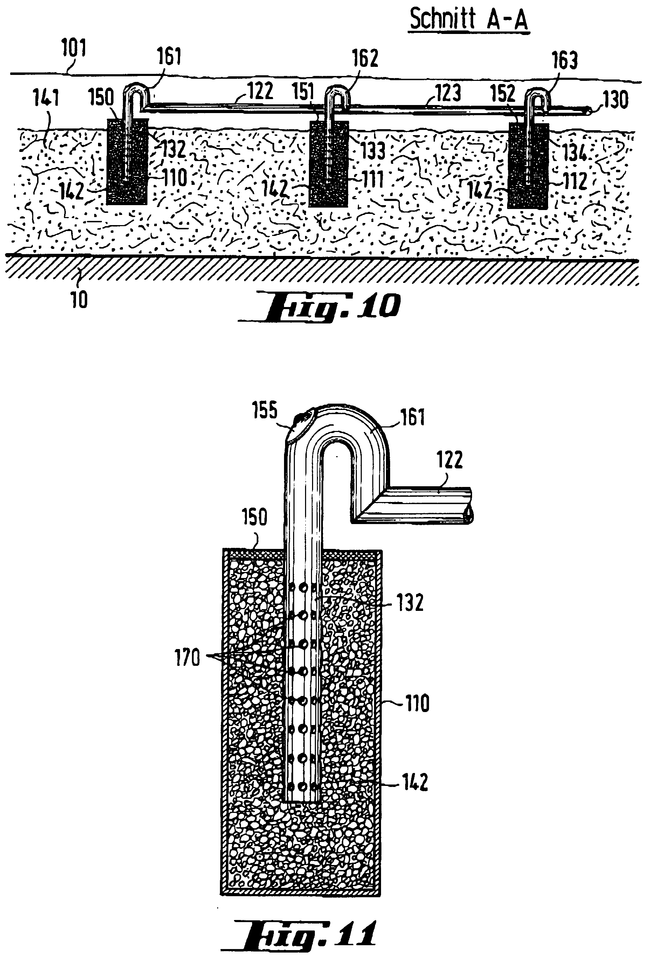

Die Gasrohre 132 - 134; 113 - 121 sind in der Fig. 9 in einer Draufsicht und nur schematisch dargestellt. Eine etwas genauere Darstellung einiger dieser Gasrohre zeigt die Fig. 10, die eine auf die Fig. 9 bezogene Schnittdarstellung A-A ist.

Die Gasrohre 132 - 134, die mit Perforationen versehen sind, sind hierbei in Kies 142 eingebettet, der sich seinerseits in einem Zylinder 110, 111, 112 befindet. Aus dem Kies 142 ragt ein U-förmiger Teil 161 - 163 der Gasrohre 132 - 134 heraus, der in die weiterführenden Rohre 122 bzw. 123 mündet, die ihrerseits auf das Sammelrohr 130 führen, das an die Absaugpumpe 160 angeschlossen ist. Über den U-förmigen Teilen 161 - 163 befindet sich die Folie 101. Die Zylinder 110 - 112 sind ihrerseits in Müll 141 eingebettet.

Wenn nun die Saugpumpe 160 in Betrieb genommen wird, werden die sich im Müll 141 entwickelnden Gase aus dem Müll 141 abgezogen und über den Kies 142 auf die Gasrohre 132 - 134 geführt.

Die Darstellung der Fig. 10 ist nicht maßstäblich. In der Praxis sind die Abstände zwischen den Rohren 132, 133, 134 größer als dargestellt. Die Rohre 132 - 134 haben etwa einen Durchmesser von 10 cm, während die Zylinderrohre 110 - 111 einen Durchmesser von 150 cm aufweisen.

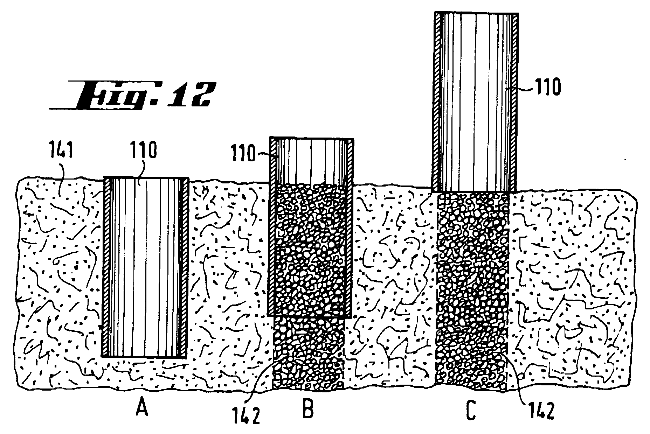

In der Fig. 11 ist das Gasrohr 132 näher dargestellt. Man erkennt hierbei, daß es in den Kies 142 eingebettet ist und zahlreiche Löscher 170 aufweist. Der Kies 142 ist von dem Zylinderrohr 142 umgeben, der unten offen ist und oben eine Dichtung 150 aufweist, die beispielsweise aus Lehm bestehen kann.

Das U-förmige Teil 161 ist mit einer Klappe 155 versehen, die als Kontrollöffnung dient.

Die Zylinderrohre 110 - 112 mit der Kiesfüllung werden zu Beginn der Müllaufschüttung dicht über dem Erdboden bzw. der profilierten Müllschüttung 10 angeordnet und dann allmählich nach oben verschoben. Es ist also nicht erforderlich, die Rohre 110 mit anwachsender Müllmenge auszutauschen und durch längere Rohre zu ersetzen. Vielmehr genügt es, relativ kleine Rohre zu verwenden, die mit wachsender Müllschicht nach oben verschoben werden.

In der Fig. 12 sind drei Stadien A, B, C des Hochziehens eines Zylinderrohrs 110 dargestellt. Das zugehörige Gasrohr 132 wurde der Einfachheit halber weggelassen. Es ist somit stets das gleiche Zylinderrohr 110 dargestellt, jedoch zu verschiedenen Zeitpunkten.

Zum ersten Zeitpunkt A ist das Rohr 110 vollständig in Müll 141 eingebettet. Es kann mit Kieselsteinen gefüllt sein, die jedoch bei A weggelassen sind. Wächst nun der Müll 141 durch Aufschüttung nach oben, wird das Zylinderrohr 110 ab einer bestimmten Müllhöhe per Hand oder mittels Hebevorrichtungen nach oben gezogen, wie es zum Zeitpunkt B dargestellt ist. Dabei wird das Zylinderrohr 110 mit Kieselsteinen 142 aufgefüllt, die am unteren Ende des Rohrs 110 den von diesem verlassenen Raum ausfüllen.

Zum Zeitpunkt C befindet sich die Unterkante des Zylinderrohrs 110 dort, wo sich zum Zeitpunkt A seine Oberkante befand. Der zum Zeitpunkt A vom Zylinderrohr 110 umschlossene Raum ist zum Zeitpunkt C ganz durch Kieselsteine ersetzt.

Es versteht sich, daß die Oberkanten des Mülls 141 zu den Zeitpunkten B und C im Vergleich zum Zeitpunkt A ebenfalls nach oben gewachsen sind. In der Fig. 12 ist dies jedoch der Einfachheit halber nicht dargestellt.

Die Gasrohre 132 - 134 bleiben bei wachsender Müllschicht in dem Kies 142 und werden durch Anschweißen von zusätzlichen Rohrstücken nach oben verlagert.

Die Rohre 122, 123 haben ein Mindestgefälle von 5 % zur Vermeidung von Kondensatverschlüssen infolge Müllsetzungen.

## Patentansprüche

1. Verfahren zum oberirdischen Ablagern von umweltrelevanten Stoffen mit einer in verschiedene Bereiche unterteilbaren Folie als Abdeckung, **gekennzeichnet durch** folgende Schritte:
1.1 es wird ein erster Bereich geöffnet und durch die entstehende erste Öffnung werden umweltrelevante Stoffe eingebracht;
1.2 nach einer Ablagerung umweltrelevanter Stoffe durch die erste Öffnung wird die erste Öffnung wieder verschlossen;
1.3 es wird ein zweiter Bereich geöffnet und durch die entstandene zweite Öffnung werden umweltrelevante Stoffe eingebracht;
1.4 nach einer Ablagerung umweltrelevanter Stoffe durch die zweite Öffnung wird diese zweite Öffnung wieder verschlossen, und es wird anschließend ein dritter, vierter etc. Bereich in entsprechender Weise geöffnet und wieder verschlossen.

2. Verfahren nach Anspruch 1, **dadurch gekennzeichnet**, daß um die geöffneten Bereiche herum Wälle angelegt werden.

3. Verfahren nach Anspruch 1, **dadurch gekennzeichnet**, daß die umweltrelevanten Stoffe im Dünnschichtverfahren eingebracht werden.

4. Verfahren nach Anspruch 1, **dadurch gekennzeichnet**, daß über dem jeweils geöffneten Bereich ein Dach vorgesehen wird.

5. Verfahren nach Anspruch 1, **dadurch gekennzeichnet**, daß für das Öffnen und Schließen der jeweiligen Bereiche eine flexible und wasserdichte Folie (12) vorgesehen ist.

6. Verfahren nach Anspruch 5, **dadurch gekennzeichnet**, daß die flexible und wasserdichte Folie (12, 107, 108) durch Ausschneiden aus einer großen Kunststoffolie (101) gewonnen wird.

7. Verfahren nach Anspruch 1, **dadurch gekennzeichnet**, daß in die umweltrelevanten Stoffe Gasableitungen (132 bis 134) eingebaut werden.

8. Verfahren nach Anspruch 7, **dadurch gekennzeichnet**, daß die Gasableitungen (132 bis 134) mit Absaugpumpen verbunden werden.

9. Verfahren nach Anspruch 7, **dadurch gekennzeichnet**, daß die Gasableitungen (132 bis 134) mit Zylinderrohren (110 bis 112) umgeben werden.

10. Verfahren nach Anspruch 9, **dadurch gekennzeichnet**, daß zwischen den Gasableitungen (132 bis 134) und den Zylinderrohren (110 bis 112) Kies (142) eingegeben wird.

11. Verfahren zur Herstellung eines Untergrunds für die Ablagerung von umweltrelevanten Stoffen nach dem Verfahren gemäß Anspruch 1, **gekennzeichnet durch** folgende Schritte:
11.1 es wird ein Deponiekörper (7) so gestaltet, daß sich ein definiertes Gefälle von einem Innenbereich (8) zu einem Außenbereich (9) ergibt;
11.2 auf dem mit dem definierten Gefälle versehenen Deponiekörper wird eine profilierte Schüttung (10) aufgebracht;
11.3 auf die profilierte Schüttung (10) wird eine Auflage- und Schutzschicht (11) aufgebracht.

## Claims

1. Method for over-ground deposition of environmentally relevant materials with a sheet as a cover which can be divided into different sections, **characterized by** the following stages:
1.1 a first section is opened and environmentally relevant materials are deposited through the opening thus formed;
1.2 after deposition of the environmentally relevant materials through the first opening, the first opening is closed again;
1.3 a second section is opened and environmentally relevant materials are deposited through the second opening thus formed;
1.4 after deposition of the environmentally relevant materials through the second opening, this second opening is closed again, and following this a third, fourth etc. section is opened and closed again in the same way.

2. Method in accordance with Claim 1, **characterized in that** earth walls are built up around the opened sections.

3. Method in accordance with Claim 1, **characterized in that** the environmentally relevant materials are deposited by the thin layer method.

4. Method in accordance with Claim 1, **characterized in that** a roof is provided over the section currently open.

5. Method in accordance with Claim 1, **characterized in that** a flexible and waterproof sheet (12) is provided for the opening and closing of the respective sections.

6. Method in accordance with Claim 5, **characterized in that** the flexible and waterproof sheet (12, 107, 108) is produced by cutting out of large plastic sheet (101).

7. Method in accordance with Claim 1, **characterized in that** gas waste pipes (132 to 134) are embedded in the environmentally relevant materials.

8. Method in accordance with Claim 7, **characterised in that** the gas waste pipes (132 to 134) are connected to suction pumps.

9. Method in accordance with Claim 7, **characterised in that** the gas waste pipes (132 to 134) are surrounded with cylindrical pipes (110 to 112).

10. Method in accordance with Claim 9, **characterised in that** gravel (142) is placed between the gas waste pipes (132 to 134) and the cylindrical pipes (110 to 112).

11. Method for forming a base for the deposition of environmentally relevant materials in accordance with the method according to Claim 1, **characterised by** the following stages:
11.1 a waste deposit area (7) is formed in such a way that there is a defined gradient from an inner section (8) towards an outer section (9);
11.2 a shaped hard core (10) is placed on the waste deposit area provided with the defined gradient;
11.3 a bearing and protective layer (11) is placed on the shaped hard core (10).

## Revendications

1. Procédé de déposition en surface de substances dangereuses pour l'environnement, comportant en tant que couverture une feuille pouvant être subdivisée en plusieurs domaines, caractérisé par les étapes suivantes :
1.1 on ouvre un premier domaine, et par la première ouverture ainsi créée, on introduit des substances dangereuses pour l'environnement ;
1.2 après avoir déposé les substances dangereuses pour l'environnement par la première ouverture, on referme la première ouverture ;
1.3 on ouvre un deuxième domaine et, par la deuxième ouverture ainsi créée, on introduit des substances dangereuses pour l'environnement ;
1.4 après déposition de substances dangereuses pour l'environnement par la deuxième ouverture, on referme cette deuxième ouverture, puis on ouvre et on referme d'une manière correspondante un troisième domaine, un quatrième domaine, etc..

2. Procédé selon la revendication 1, caractérisé en ce que des murs sont disposés tout autour des domaines ouverts.

3. Procédé selon la revendication 1, caractérisé en ce que les substances dangereuses pour l'environnement sont mises en place par le procédé en couche mince.

4. Procédé selon la revendication 1, caractérisé en ce qu'un toit est prévu au-dessus de chaque domaine ouvert.

5. Procédé selon la revendication 1, caractérisé en ce qu'on prévoit pour l'ouverture et la fermeture des différents domaines une feuille (12), souple et étanche à l'eau.

6. Procédé selon la revendication 5, caractérisé en ce que la feuille souple et étanche à l'eau (12, 107, 108) est réalisée par découpage à partir d'une grande feuille plastique (101).

7. Procédé selon la revendication 1, caractérisé en ce que des conduites d'évacuation de gaz (132 à 134) sont mises en place dans les substances dangereuses pour l'environnement.

8. Procédé selon la revendication 7, caractérisé en ce que les conduites d'évacuation de gaz (132 à 134) communiquent avec des pompes aspirantes.

9. Procédé selon la revendication 7, caractérisé en ce que les conduites d'évacuation de gaz (132 à 134) sont entourées de tubes cylindriques (110 à 112).

10. Procédé selon la revendication 9, caractérisé en ce que du gravier (142) est inséré entre les conduites d'évacuation de gaz (132 à 134) et les tubes cylindriques (110 à 112).

11. Procédé de fabrication d'un support pour déposition de substances dangereuses pour l'environnement par le procédé selon la revendication 1, caractérisé par les étapes suivantes :
11.1 on crée une structure de déposition (7) de façon à réaliser une pente parfaitement définie d'un domaine intérieur (8) à un domaine extérieur (9) ;
11.2 on applique un remblai profilé (10) sur la structure de déposition présentant la pente parfaitement définie ;
11.3 on applique sur le remblai profilé (10) une couche portante et protectrice (11).
